# EUROPEAN PATENT APPLICATION

(11) **EP 2 388 950 A2**
(43) Date of publication of application: **23.11.2011**
(21) Application number: 11153190.1
(22) Date of filing: 03.02.2011
(51) Int. Cl.: H04L 9/32

(54) **Certificate validation method and validation server**

(30) Priority: 17.03.2010 JP 2010060124
(71) Applicant: Hitachi Ltd., Tokyo 100-8280 (JP)
(72) Inventor: Sato, Akane, Tokyo 100-8220 (JP); Fujishiro, Takahiro, Tokyo 100-8220 (JP); Furuya, Masahiko, Tokyo 100-8220 (JP); Ogawa, Masami, Tokyo 100-8220 (JP)
(74) Representative: MERH-IP Matias Erny Reichl Hoffmann

(57) **Abstract**

The validation server (13) obtains information related to a first cryptographic method from a certificate which is contained in a certificate validation request from a terminal device (11). When the information related to the first cryptographic method is not stored in a storage unit (40b) of the validation server (13) as valid information, the validation server (13) determines that the information related to the first cryptographic method is invalid. When the information related to the first cryptographic method is stored in the storage unit (40b) as valid information and also the information related to a second cryptographic method listed in the certificate in the certification path is not stored in the storage unit (40b) during the certification path validation, the validation server (13) determines that the information related to the second cryptographic method is invalid.

## Description

### BACKGROUND OF THE INVENTION

The present invention relates to a technology suitably adaptable for authentification of validity of certificates in a public key infrastructure (PKI) environment.

Systems using the public key infrastructure (PKI), including a government PKI (GPKI), are becoming more widely used in order to clarify the creator of an electronic document and also to guarantee that such electronic document is free from unauthorized alteration or falsification. In some PKI-based systems, an electronic document is affixed with a digital signature according to a predetermined processing procedure (hereinafter, referred to as the "cryptographic algorithm") using a key called the secret key, also known as private key, which is exclusively owned by a person who affixes such digital signature (hereinafter, referred to as the signer). Upon receipt of the an electronic document affixed with a digital signature, the digital signature is verified with a key called a public key, which is paired with the private key of the signer and may be publicized to the third party, to verify the creator of this electronic document and that this electronic document is not falsified in any way. In applications requiring high reliability, in order to guarantee a connection between the signer and the public key, a certificate authority (CA) issues a public key certificate (hereinafter, simply referred to as "certificate") of the signer. The certificate contains the name of the CA, the expiration date, the owner's name, the information related to the owner's public key, and the like, and optionally contains the purpose of use of the key, the certificate policy, and the like. The certificate policy specifies the use purpose of the certificate, the security level, and the like which each CA specifies in issuing the certificate, and the certificate policy is added with an ID uniquely indicating this certificate policy. Furthermore, in order to guarantee the content of the certificate, with the use of the private key of a CA, the CA generates the digital signature for this certificate according to the specified cryptographic algorithm, and adds the same to the certificate. Regarding the content of the certificate, the detailed description is found Section 4 "Certificate and Certificate Extensions Profile" of the document titled "Internet X.509 Public-Key-Infrastructure, Certificate and Certificate Revocation List (CRL) Profile (RFC5280)", May, 2008 (Relevant Literature 1).

In order to perform more strict verification of a digital signature, it is necessary to verify the digital signature by means of a key called as the public key that is contained in a certificate of the signer, which is issued by a CA, and also to verify whether or not the certificate of the signer is a valid certificate satisfying the use purpose and the like or the security level for an entity or person who verifies the digital signature (hereinafter, referred to as the verifier). To verify whether the signer's certificate is valid or invalid to the verifier, it is required to perform specific processing operations, such as (1) certification path building and (2) certification path validation.

In the processing of the (1) certification path building, a chain of certificates is constructed, which is a sequence of trusts of from a CA trusted by the verifier, called the trust anchor (TA), up to the certificate of a signer. This certificate chain is a queue of a plurality of certificates, wherein the subject entity name of a certificate matches the issuer name of another certificate placed next to the certificate, and the key identifier of the subject entity of the certificate matches the key identifier of the issuer of the next certificate. The verifier accesses a repository of each CA to obtain the certificates constituting the certificate chain, thereby verifying the certificate chain. Especially in a PKI model, with CAs of different domains, in which operation entities of the certificate authority differ, being interconnected together, each of these CAs issues a certificate, called the cross-certificate, to each other.. In general, this cross-certificate often describes the information for adjusting and mutually operating the certificate policies or the like between different domains. Accordingly, when building a certification path covering a plurality of different domains, the certificate chain contains a cross-certificate(s). Regarding a certification path building methodology, the detailed description is found in Section 2 "Certification Path Building" of the document titled "Internet X. 509 Public Key Infrastructure Certification Path Building (RFC4158)", Sept. 2005 (Relevant Literature 2).

In the above-described (2) certification path validation processing, an attempt is made to ensure the validity of every certificate chain constituting the certification path that was built in the (1) certification path building processing. More specifically, either a certificate revocation list (CRL) issued by a CA or an online certificate status protocol (OCSP) is used to determine whether the certificate is valid or invalid. Moreover, the verifier verifies that an acceptable certificate policy matches the certificate policy contained in the certificate of the signer. The method of performing validation of the certification path is discussed in detail in Section 6 "Certification Path Validation" of the document titled "Internet X. 509 Public-Key-Infrastructure, Certificate and Certificate Revocation List (CRL) Profile (RFC5280)", May, 2008 (Relevant Literature 1).

Currently available models for authentication of the validity of a certificate include an end entity model for authentication of the validity of a certificate by the verifier per se, and a validation server model using a certificate validation server (hereinafter, simply referred as "validation server") which provides online the certification validation functionality on behalf of the verifier. The specification of the validation server model is described in the document titled "Delegated Path Validation and Delegated Path Discovery Protocol Requirements (RFC3379)", September, 2002 (Relevant Literature 3).

When compared to the end entity model, the validation server model offers the following advantage. First, it is possible to lessen a client's software program for certificate validation because the validation server model is free from the need for mounting on the client the certification path building function for building a certification path(s). Second, merely modifying the setup of the validation server makes it possible to flexibly cope with any possible changes in system configuration because the client trusts a decision result of the certification validation server.

If the validation server builds a certification path and obtains the CRL from a CA whenever the certification validation is performed, the time required for certificate validation processing will increase. In view of this fact, JP-A-2002-72876 (Relevant Literature 4) discloses a method, wherein the validation server registers the CRL subjected to the certificate validation processing and/or the certification path so as to speed up the certificate validation processing from the next time.

On the other hand, in the digital signature generation for an electronic document and/or the digital signature generation for a certificate by a CA, the signer or CA selects one of a plurality of choices with regard to the cryptographic algorithm used in generating the digital signature, the parameter, and the key length of a public key. However, it is pointed out that due to an advance in decryption technologies and/or an improvement in the computer capability in recent years, some of cryptographic algorithms and the public key with a short key length have a problem in safety. National Institute of Standards and Technology of the U.S. federal government, which establishes the cryptography standard, strongly recommends to migrate the hash function, which is used in generating the digital signature, from SHA-1 to SHA-2 by 2010, in the information systems in the U.S. government. The comment on the safety of SHA-1 is described in detail in the document titled "NIST Comments on Cryptanalytic Attacks on SHA-1", April, 2006 (Relevant Literature 5).

In accordance with the comment of Relevant Literature 5, the certificate authority of each country will migrate the cryptographic algorithm, which is used in generating the public key of a user and/or in generating the digital signature of a certificate, to a safer cryptographic algorithm while maintaining the compatibility with the information system using the current cryptographic algorithm.

### SUMMARY OF THE INVENTION

In the period during which a certificate authority is migrating the cryptographic algorithm (hereinafter, this period will be referred to as the "cryptography migrating phase"), a certificate which is affixed with a digital signature using the current cryptographic algorithm before migration of the cryptography and a certificate which is affixed with a digital signature using a safer cryptographic algorithm after migration of the cryptography will be mixed. For this reason, when a verifier explicitly does not wish to accept a certificate which is affixed with a digital signature using a specific algorithm or when the safety of the current cryptographic algorithm significantly decreases and is determined as cryptographic algorithm compromise, the validation of the certificate using this cryptographic algorithm needs to fail.

Moreover, Relevant Literature 1 describes an approach, wherein a verifier, when transmitting a certificate validation request, explicitly designates a certificate policy to be accepted, so that the verifier per se provides a constraint on the certification validation. However, in the cryptography migrating phase, in order to secure the mutual operability among a plurality of information systems, a CA in the cryptography migrating phase may perform cross certification with another CA which has not yet performed migration of the cryptography, thereby mapping a certificate policy with a high cryptography strength to a certificate policy with a low cryptography strength and listing the policy mapping information in a cross-certificate. In such a case, if a verifier, with a CA, which has performed the migration of the cryptography, as a trust point, performs validity authentication processing on a certificate which is issued from another CA which has not performed the migration of the cryptography yet, then it is determined from the above-described cross-certificate that the certificate policy with a high cryptography strength is equivalent to the certificate with a low cryptography strength, so that the result of the certificate validation processing can be valid. Because the verifier, even if the certificate policy with a high cryptography strength is designated, cannot exclude a certificate which is affixed with a digital signature using a cryptographic algorithm with a low cryptography strength, the reliability of the result of the certificate validation processing will be lost.

Furthermore, in the technologies described in Relevant Literature 1 and Relevant Literature 4 described above, a certificate affixed with the digital signature of a CA, a CRL, and/or an OCSP response are obtained from the CA to perform the certification path validation. However, if cryptographic algorithm compromise occurs in the cryptography migrating phase and a notice to stop using a corresponding cryptographic algorithm is issued from the government organization or the like, then in the certification path validation, the following problem will occur.

When a compromise of the current cryptographic algorithm occurred before a CA performs the migration of the cryptography or in the middle of migration of the cryptography, the CA needs to migrate the cryptographic algorithm used for digital signature to a safer one and then revoke a certificate(s) using the compromised cryptographic algorithm and further issue a certificate revocation list and/or a certificate(s) based on a new cryptographic algorithm. However, the above-described procedure takes time, and therefore the CA is most likely not to be able to respond promptly. Accordingly, in such a case, the information provided from the CA, which is affixed with a digital signature using a compromised cryptographic algorithm, will be used in the certification path validation and thus the reliability of a result of the certificate validation processing will be lost.

The present invention has been made in view of the above-described problems, and its object is to provide a certificate validation method capable of performing the certificate validation processing safely and promptly, and a validation server for implementing this method.

One aspect of the embodiments of the present invention for solving the above-described problems is now described. A certificate validation method according to the present invention comprises the steps of: by means of a validation server connected to a network together with a plurality of terminal devices and a plurality of certificate authorities, receiving a certificate validation request from a given terminal device via the network; building a certification path of from a first certificate authority to a second certificate authority; performing validation of the certification path; and/or sending this validation result to the terminal device, which is the certificate validation request source, via the network. Here, the validation server has the following configuration.

The validation server includes a storage unit storing the information related to a cryptographic method used in generating the digital signature of the certificate.

The validation server obtains information related to a first cryptographic method from a certificate contained in the certificate validation request, and if the information related to the first cryptographic method is not stored as valid information in the storage unit, the validation server determines that the information related to the first cryptographic method is invalid.

Moreover, if the information related to the first cryptographic method is stored as valid information in the storage unit and also the information related to a second cryptographic method listed in the certificate in the certification path is not stored in the storage unit during the certification path validation, the validation server determines that the information related to the second cryptographic method is invalid.

According to the present invention, the certificate validation processing can be performed safely and promptly.

Other objects, features and advantages of the invention will become apparent from the following description of the embodiments of the invention taken in conjunction with the accompanying drawings.

### BRIEF DESCRIPTION OF THE DRAWINGS

FIG. 1 is a diagram showing a configuration of a validation system according to an embodiment of the present invention.
FIG. 2 is a diagram showing a configuration of a terminal device 11.
FIG. 3 is a diagram showing a configuration of a CA(Certificate Authority) 12 which provides certificate revocation information by using a CRL.
FIG. 4 is a diagram showing a configuration of the CA 12 which provides the certificate revocation information by using an OCSP responder.
FIG. 5 is a diagram showing a configuration of a validation server 13.
FIG. 6 is a diagram showing an example of a hardware configuration of each of the terminal device 11, the CA 12, and the validation server 13 shown in FIGS. 2 to 4.
FIG. 7 is a diagram showing a cryptographic method which a verifier does not accept, and information on a certificate authority which exceptionally makes this cryptographic method valid, stored in a configuration information holding unit 48 in the validation server 13.
FIG. 8 is a diagram showing a cryptographic method which a verifier accepts, and information on a certificate authority which exceptionally makes this cryptographic method invalid, stored in the configuration information holding unit 48 in the validation server 13.
FIG. 9 is a diagram showing information related to a certificate policy, which a verifier does not accept, stored in the configuration information holding unit 48 in the validation server 13.
FIG. 10 is a flow chart showing certificate validation processing in the validation server 13.
FIG. 11 is a flow chart showing cryptographic method check processing of a certificate validation request of FIG. 10 in the validation server 13.
FIG. 12 is a flow chart showing certification path validation processing of FIG. 10 in the validation server 13.
FIG. 13 is a flow chart showing cryptographic method check processing of FIG. 11 and FIG. 12 using the diagram of FIG. 7, in the validation server 13.
FIG. 14 is a flow chart showing the cryptographic method check processing of FIG. 11 and FIG. 12 using the diagram of FIG. 8, in the validation server 13.

### DETAILED DESCRIPTION OF THE EMBODIMENTS

Hereinafter, the embodiments of the present invention will be described in detail with reference to the accompanying drawings.

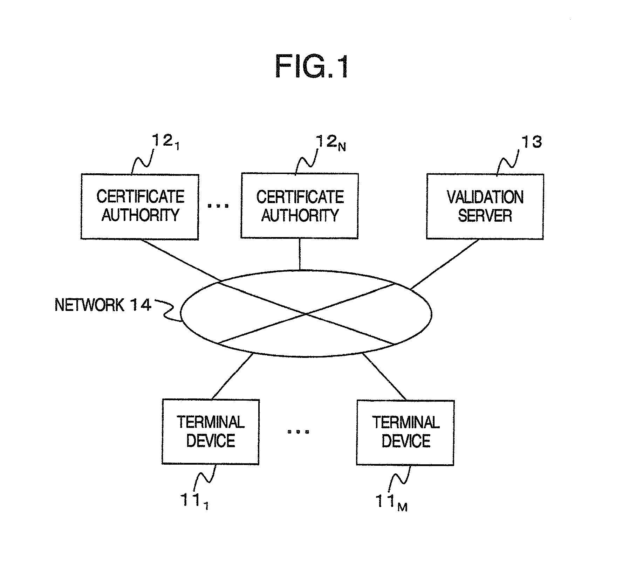

FIG. 1 is a diagram showing a configuration of a validation system according to an embodiment of the present invention.

In this embodiment, the validation system comprises: a plurality of terminal devices 11₁ to 11_{M} (collectively referred to as "terminal device 11") which electronically performs procedures; a plurality of Certificate Authority 12₁ to 12_{N} (collectively referred to as "CA 12") which perform services for issuance and revocation of certificates; a validation server 13 which provides certificate revocation information; and a network 14 such as the Internet for interconnection of the respective ones of the system components 11-13.

Next, each device or apparatus constituting the validation system of FIG. 1 will be described.

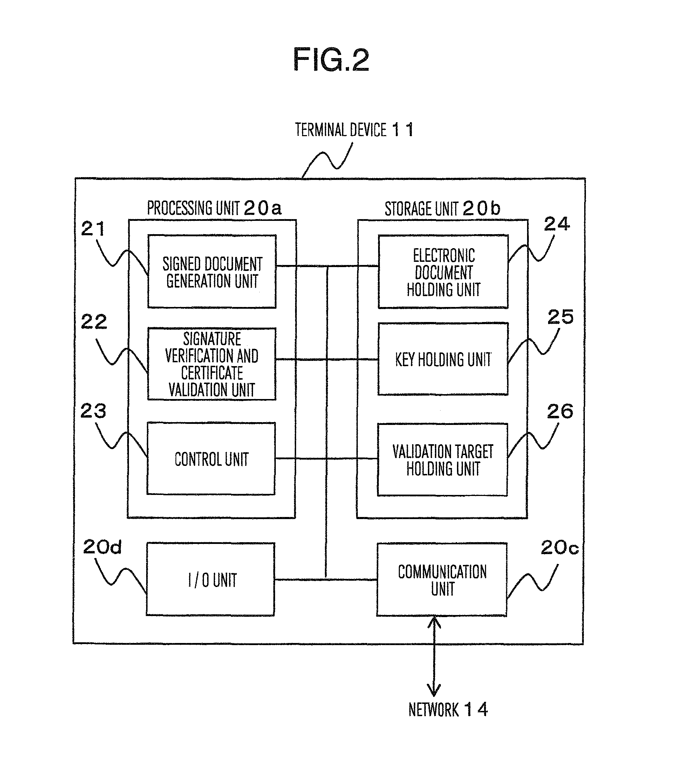

First, the terminal device 11 is described using FIG. 2.

The terminal device 11 includes a processing unit 20a, a storage unit 20b, a communication unit 20c for communicating with other devices or apparatuses via the network 14, and an I/O unit 20d which performs input/output of electronic documents created by users of the terminal device 11 and/or electronic documents received from other terminal device 11, and also performs reception of instructions from the users.

The processing unit 20a includes a signed document generation unit 21 which adds a digital signature to an electronic document to thereby create a signed electronic document, a signature verification and certificate validation unit 22 for performing verification of signatures of signed electronic documents and validation of certificates thereof, and a control unit 23 for overall control of the respective parts of the terminal device.

The storage unit 20b includes an electronic document holding unit 24 which retains electronic documents created by users, a key holding unit 25 which retains a private key used for generation of a digital signature and a certificate of a public key to be paired with the private key along with a certificate of a CA trusted by a user who uses this terminal device 11, and a validation target holding unit 26 which retains a digital signature-added or "digitally-signed" electronic document(s) received from another terminal device 11, and a certificate(s) thereof.

In such a configuration, the control unit 23 receives from a user an instruction for transmitting via the I/O unit 20d to another user a certain electronic document which is retained in the electronic document holding unit 24. Upon receipt of such an instruction, the control unit 23 reads the electronic document from the electronic document holding unit 24 and then passes it to the signed document generation unit 21. The signed document generation unit 21 uses a private key being retained in the key holding unit 25 to generate an appropriate digital signature for the electronic document passed thereto. Then, the signed document generation unit 21 adds this generated signature to the passed electronic document, thereby creating a signed electronic document. The control unit 23 sends the signed electronic document created by the signed document generation unit 21 and the corresponding certificate retained in the key holding unit 25 via the communication unit 20c to a destination terminal device 11 which is designated by the user.

Upon receipt of the signed electronic document and its certificate from another terminal device 11 via the communication unit 20c, the control unit 23 causes the validation target holding unit 26 to retain these document and certificate while correlating them with each other, and notifies the signature verification and certificate validation unit 22 of a request for validation of these document and certificate.

In response to receipt of this validation request, the signature verification and certificate validation unit 22 validates the signed electronic document being retained in the validation target holding unit 26, by using the certificate which was received together with the signed electronic document. Then, the signature verification and certificate validation unit 22 defines the certificate, which was used for the signature verification of the signed electronic document, as a validation target certificate, and performs validation using the CA certificate of the user's trusted CA which is retained in the key holding unit 25. In this validation processing of the validation target certificate, the signature verification and certificate validation unit 22 performs several operations including verification of the signature of this validation target certificate, verification of non-expiration of its valid period, verification of other constrains, and verification of whether the validation target certificate is revoked or not.

In order to perform the verification of whether the validation target certificate is revoked or not, the signature verification and certificate validation unit 22 sends a validation request to the validation server 13. Then, when every validation is completed successfully and also when receiving from the validation server 13 a validation result indicating that the certificate of interest is not revoked, the signature verification and certificate validation unit 22 accepts the validity of the validation target certificate and treats the signed electronic document as a trustworthy or "legitimate" document, and as required, outputs the validation results of the signed electronic document and its certificate from the I/O unit 20d.

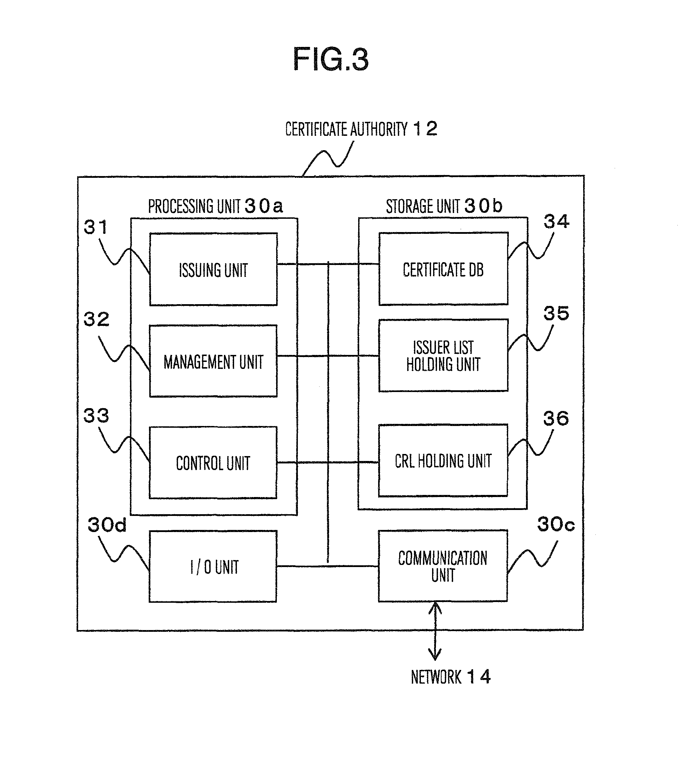

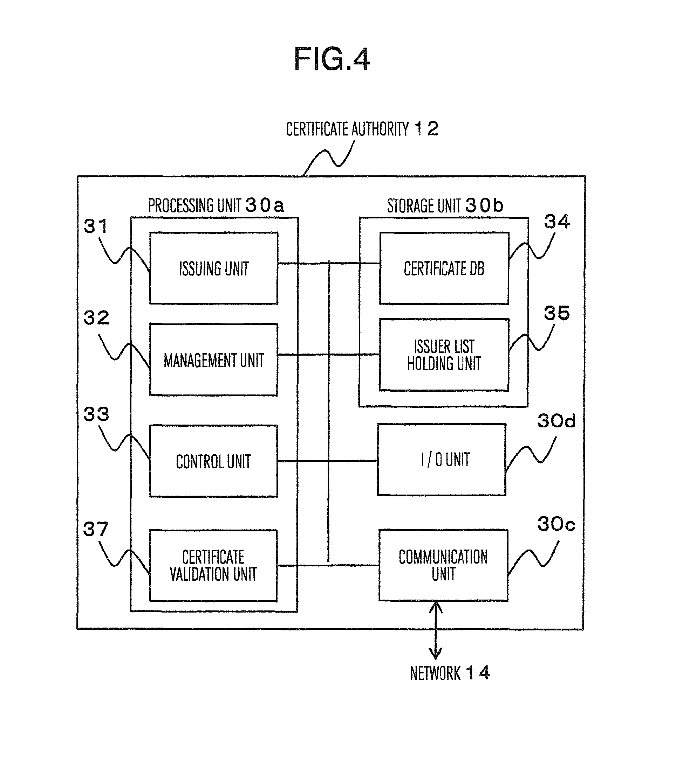

Next, the CA 12 is described using FIG. 3 and FIG. 4. The CA 12 takes the configuration of FIG. 3 when the certificate revocation information is provided using the CRL, while when the certificate revocation information is provided using the OCSP responder, it takes the configuration of FIG. 4.

The CA 12 includes a processing unit 30a, a storage unit 30b, a communication unit 30c for communicating with other devices or apparatuses, and an I/O unit 30d for performing input/output of certificates or the like and reception of an instruction from an operator of the CA along with the outputting of a processing result.

The processing unit 30a includes an issuing unit 31 which issues a certificate(s), a management unit 32 for performing management of the certificate issued by the issuing unit, and a control unit 33 for total control of the respective parts of the CA 12. Note that the CA12 taking the configuration of FIG. 4 further includes a certificate validation unit 37.

The storage unit 30b includes a certificate database (DB) 34 which retains those certificates issued by the issuing unit 31, an issuer management list holding unit 35 which retains an issuer management list in which the issuer of each certificate retained in the certificate database 34 is listed, and a CRL holding unit. Note that the CA 12 taking the configuration of FIG. 4 does not include the CRL holding unit 36.

In such a configuration, upon receipt of a certificate issuance request via either the I/O unit 30d or the communication unit 30c, the control unit 33 notifies the issuing unit 31 of this information. In response to receipt of the information, the issuing unit 31 creates a certificate corresponding thereto. In this case, the issuing unit 31 adds a digital signature to the certificate using the CA's private key. Then, this certificate is passed via mail or over communication lines to the issuance request source by way of either the I/O unit 39d or the communication unit 30c. In addition, the control unit registers this certificate to the certificate DB 34 and at the same time writes the information of its issuer (i.e., issuance request source) into an issuer management list which is retained in the issuer management list holding unit 35.

Upon receipt of the certificate revocation request via either the I/O unit 30d or the communication unit 30c, the control unit 33 notifies the management unit 32 of this information. Upon receipt of this information, the management unit 32 deletes from the certificate data base 34 the certificate to be revoked, and additionally writes a revocation status and revocation reason into the information of this certificate being retained in the issuer management list holding unit 35.

Then, the management unit 32 of the CA 12 taking the configuration of FIG. 3 periodically creates a certificate revocation list (CRL) in which is listed a serial number of the certificate that was deleted from the certificate data base 34 in response to the revocation request received, and saves this list in the CRL holding unit 36. Note that, the created CRL contains several items as listed therein, including a serial number of the certificate that is revoked regardless of the fact that its validity period is not expired yet, a time and date of the occurrence of such certificate revocation, and a reason why the certificate was revoked. Further listed in the CRL is a scheduled time point at which the next CRL is created, with a signature added using the private key of the CA of interest.

The control unit 12 of the CA 12 taking the configuration of FIG. 3, upon receipt of a CRL acquisition request from another device via the communication unit 30c, sends via the communication unit 30c the CRL retained in the CRL holding unit 36 to the another device that has issued this inquiry.

Alternatively, the control unit 33 of the CA 12 taking the configuration of FIG. 4 operates in a way which follows: when receiving via the communication unit 30c from another device an OCSP request for inquiring certificate revocation information, the certificate validation unit 37 creates from the information of the certificate retained in the certificate data base 34 an OCSP response indicative of whether the certificate of interest is revoked or not, and then sends via the communication unit 30c this response to the other device that has issued this inquiry. In this OCSP response, the status of the certificate is listed, with a signature added thereto using the secret or private key of the CA of interest or the private key of the OCSP responder.

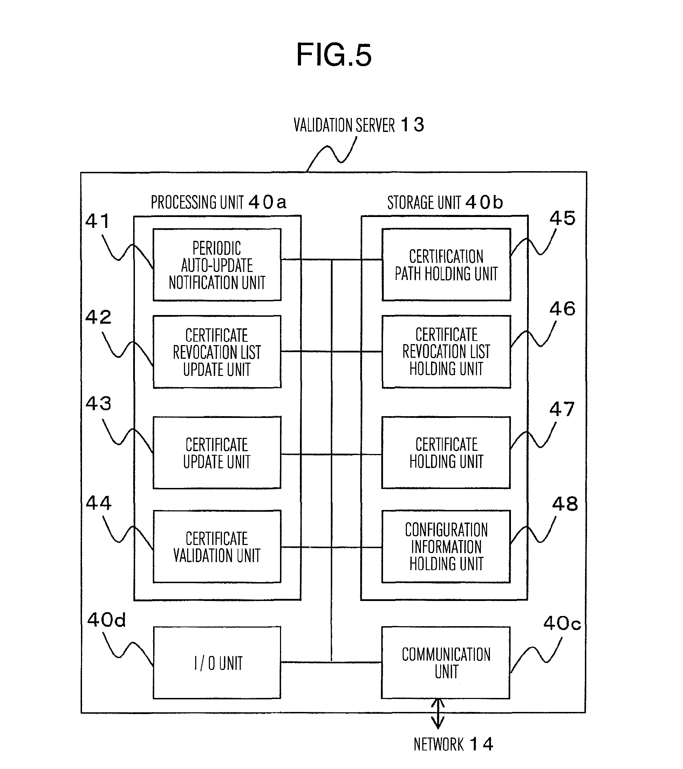

Next, the validation server 13 is described using FIG. 5.

The validation server 13 includes a processing unit 40a, a storage unit 40b, a communication unit 40c for communicating with other devices or equipments via the network 14, and I/O unit 40d which performs input/output of a certificate(s) and reception of an instruction(s) from an operator of the validation server 13.

The processing unit 40a includes a periodic auto-update notification unit 41, a certificate revocation list update unit 42, a certificate update unit 43, and a certificate validation unit 44.

The storage unit 40b includes a certification path holding unit 45, a certificate revocation list holding unit 46, a certificate holding unit 47, and a configuration information holding unit 48.

When the present time reaches either a time point for periodically updating the certificate revocation list stored in the certificate revocation list holding unit 46 or the next-scheduled update time and date, the periodic auto-update notification unit 41 notifies the certificate revocation list update unit 42 of this information. Here, the certificate revocation list refers to the CRL and OCSP response. When the present time becomes a specific time for periodic update of the certificate stored in the certificate holding unit 47, the periodic auto-update notification unit 41 notifies the certificate update unit 43 of this information. The periodic update time points of the certificate revocation list and certificates are stored in the configuration information holding unit 48.

Upon receipt of the notice from the periodic auto-update notification unit 41, the certificate revocation list update unit 42 will obtain the latest version of the certificate revocation list from the issuance source of this certificate revocation list and update the certificate revocation list presently being stored in the certificate revocation list holding unit 46. Upon receipt of a certificate revocation list update notice from the certificate update unit 43, the certificate revocation list update unit 42 updates the certificate revocation list stored in the certificate revocation list holding unit 46.

Upon receipt of the notice from the periodic auto-update notification unit 41, the certificate update unit 43 obtains a certificate from the certificate database 34 of the CA 12 which has issued the certificate of interest. If this certificate has already been updated, the certificate update unit 43 updates the certificate stored in the certificate holding unit 47. Alternatively, if this certificate is expired or this certificate is revoked, the certificate update unit 43 deletes the certificate stored in the certificate holding unit 47. In addition, upon receipt of a certificate update notice from the certificate validation unit 44, the certificate update unit 43 updates the certificate stored in the certificate holding unit 47 and furthermore sends a certificate revocation list update notice to the certificate update unit 44.

Upon receipt of the certificate validation request from the terminal device 11 via the communication unit 40c, the certificate validation unit 44 will use the certification path stored in the certification path holding unit 45, the certificate revocation list stored in the certificate holding unit 47, and the certificate stored in the certificate holding unit 47 to build an appropriate certification path of from the certificate of a target subject to be validated up to a trust anchor of the verifier, thereby verifying the validity of those certificates in the certification path in a sequential order. In addition, the verifier uses the certificates of the certification path in a sequential order to verify that an acceptable certificate policy matches the certificate policy contained in the certificate of the signer. The certificate validation unit 44 also sends a validity authentication result of a certificate with the signature of the validation server added thereto toward the terminal device 11 via the communication unit 40c.

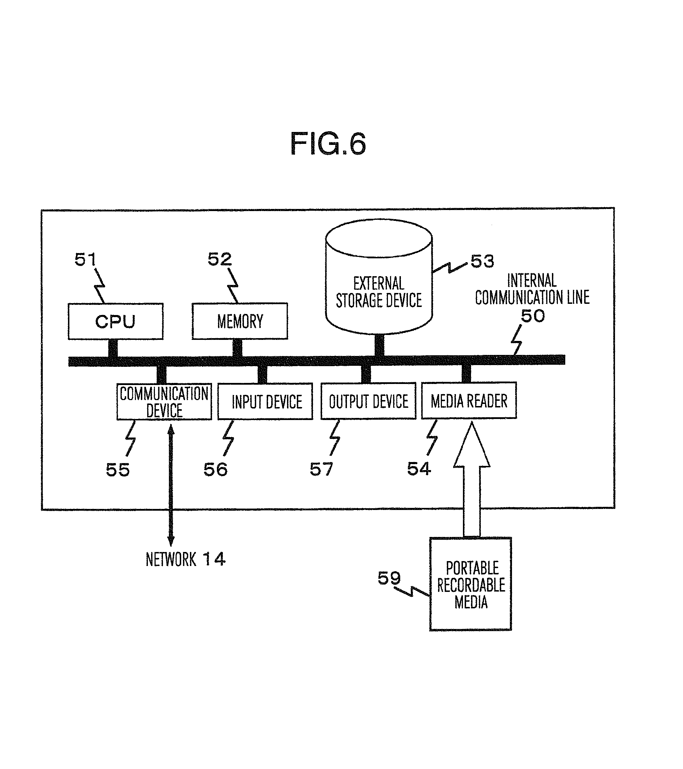

It should be noted that each of the terminal device 11, the CA 12, and the validation server 23 shown in FIGS. 2 to 5 can be actually implemented on a currently available standard computer. An example of this computer is shown in FIG. 6. As shown here, the computer includes a CPU 51, a memory 52, an external storage device 53 such as a hard disc drive, a media reader 54 which reads data or information from a portable recordable media 59 such as a CD-ROM, a communication device 55 for communicating with other devices via the network 14, an input device 56 such as a keyboard and/or a mouse, an output device 57 such as a monitor and/or a printer, and an internal communication line 50 for performing data transmission/reception between any two of these computer components.

Each of the above-described processing units is functionally realizes by executing a certain software program which is loaded onto the memory 52 from the external storage device 53 under control of the CPU 51. That is, the communication units 20c, 30c, 40c can be realized by utilization of the communication device 55 by the CPU 51; the I/O units 20d, 30d, 40d can be realized by utilization of the input device 56, the out device 57 and the media reader 54 by the CPU 51; and the storage units 20b, 30b, 40b can be realized by utilization of the memory 52 and/or the external storage device 53 by the CPU. Additionally, the processing units 20a, 30a, 40a can be realized as a process of the CPU 51.

The above-described software program may be pre-stored in the external storage device 53. Alternatively, this program may be stored in the recording medium 59 usable by the above-described computer. In this case, the program is read therefrom by the media reader 54 for installation to the external storage device 53 as required. Alternatively, the program may be the one that is installed to the external storage device 53 after being downloaded from either a network which is a communication medium usable by the above-described computer or other device which is connected to the communication device 55 that uses a carrier wave propagating over the network.

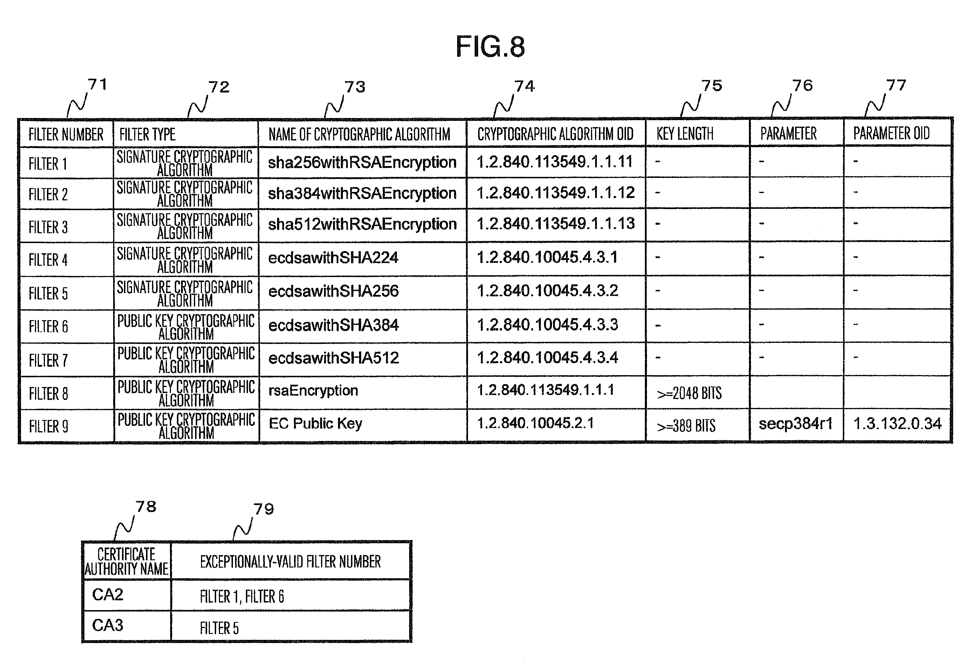

Next, with the use of FIG. 8, a table, in which cryptographic methods accepted by a verifier are set, and a table, in which a relation between a cryptographic method and a certificate authority which exceptionally makes the cryptographic method invalid is set, stored in the configuration information holding unit 48 are described. Note that, in this embodiment, the cryptographic method refers to the cryptographic algorithm used for digital signature, the key length of a public key, and the parameter of the public key.

In the order of rows of the table, a filter number is listed in a column of filter number 71 and either a "signature cryptographic algorithm" or a "public key cryptographic algorithm" is listed in a column of filter type 72. The name of a cryptographic algorithm accepted by a verifier is listed in a column of cryptographic algorithm 73. Furthermore, an OID (Object IDentifier) of this cryptographic algorithm is listed in a column of cryptographic algorithm OID 74. When the filter type 72 is a public key cryptographic algorithm, the key length of the public key which the verifier accepts is listed in a column of key length 75. In the corresponding cryptographic algorithm, if all the key lengths are accepted, nothing is listed in the column of key length 75. The parameter of a public key accepted is listed in a column of parameter 76, and furthermore the OID of this parameter is listed in a column of parameter OID 77. If all the parameters are accepted in the corresponding cryptographic algorithm, nothing is listed in the column of parameter 76 and the column of parameter OID 77. When the filter type 72 is the signature cryptographic algorithm, nothing is listed in the column of key length 75, column of parameter 76, and column of parameter OID 77.

When a specific cryptographic algorithm is exceptionally made invalid only for the certificate issued from a specific certificate authority, the name of the certificate authority is listed in a column of certificate authority name 78. Moreover, in order to specify the cryptographic algorithm, a filter number listed in the column of filter number 71 is listed in a column of exceptionally-invalid filter number 79. If a cryptographic method which a verifier exceptionally accepts is not made invalid, nothing is listed in the column of certificate authority 78 and the column of exceptionally-invalid filter number 79.

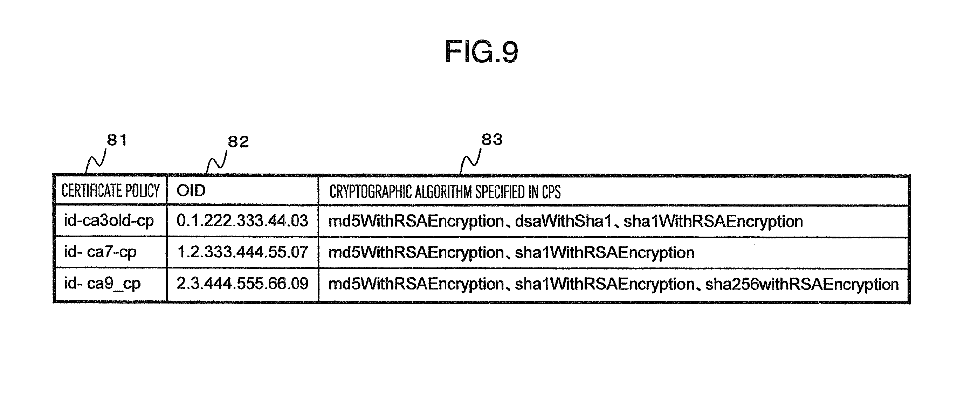

Next, with the use of FIG. 9, a table, in which information related to a certificate policy which a verifier does not accept is set, stored in the configuration information holding unit 48 is described.

The name of a certificate policy which a verifier does not accept is listed in a column of certificate policy 81, and furthermore, the OID of this certificate policy is listed in a column of OID 82. Moreover, from CPS which a CA has already publicized, a cryptographic algorithm which the CA uses in generating the digital signature of a certificate is extracted and listed in a column of cryptographic algorithm 83.

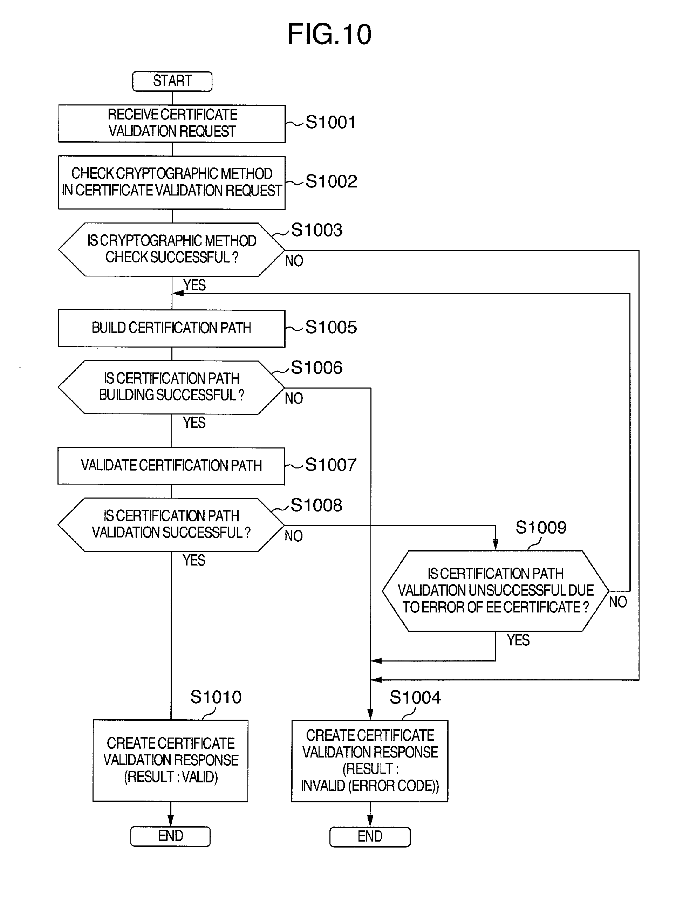

Next, with the use of FIG. 10, the certificate validation processing in the certificate validation unit 44 is described.

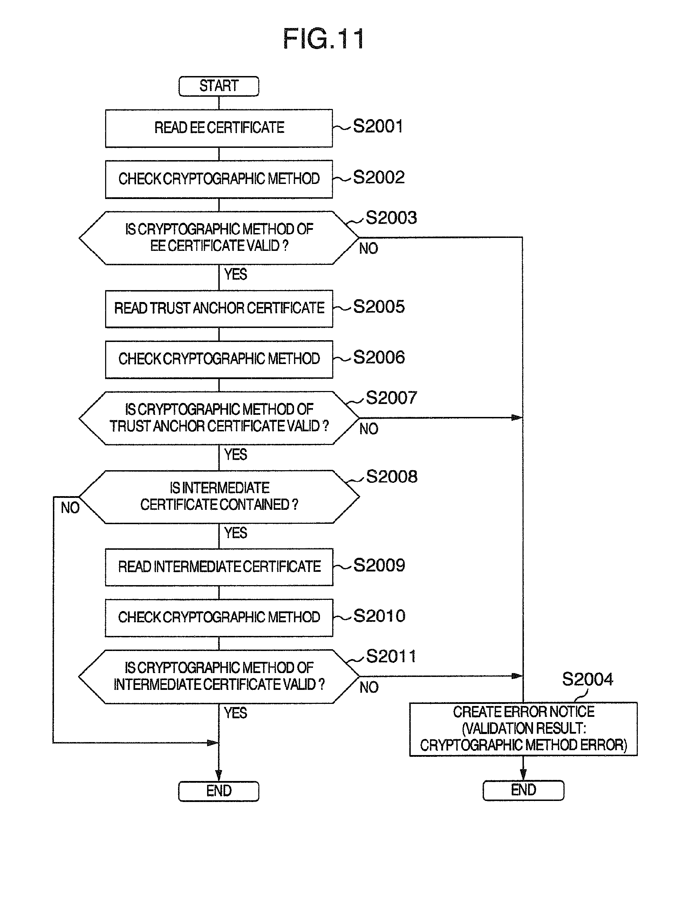

The certificate validation unit 44 receives a certificate validation request from a given terminal device 11 via the communication unit 40c (Step S1001), and then checks the cryptographic method of an EE (End Entity) certificate, a trust anchor certificate, and a certificate of an intermediate certificate which are contained in the certificate validation request (Step S1002). Note that, in this embodiment, the EE certificate is a certificate issued to the user of a public key, representing the certificate which a signer uses for a digital signature. The trust anchor certificate represents the certificate of a root CA trusted by the verifier. The intermediate certificate represents the certificate of a CA which is positioned at a lower level of the root CA trusted by the EE and issues the EE certificate. When the cryptographic method check of the certificate of the EE certificate, trust anchor certificate, or intermediate certificate is unsuccessfully completed, a certificate validation response can be created (Step S1004) before performing certification path building (Step S1005) and certification path validation (Step S1007). Therefore, in Step S1002, it is possible to promptly send the certificate validation response to the terminal device 11. The detail of the cryptographic method check processing of the certificate validation request will be described in FIG. 11. When the cryptographic method check of the certificate validation request is unsuccessfully completed ("No" in Step S1003), the certificate validation unit 44 adds an error code, which is determined in the cryptographic method check, and creates a certificate validation response with the validity authentification result indicating that the certificate is invalid (Step S1004).

When the cryptographic method check of the certificate validation request is successfully completed ("Yes" in Step S1003), the certificate validation unit 44 builds the certification path of from the trust anchor to the issuer of the EE certificate (Step S1005).

When the certification path building is unsuccessfully completed ("No" in Step S1006), the certificate validation unit 44 adds an error code, which is determined in the certification path building, and proceeds to Step S 1004.

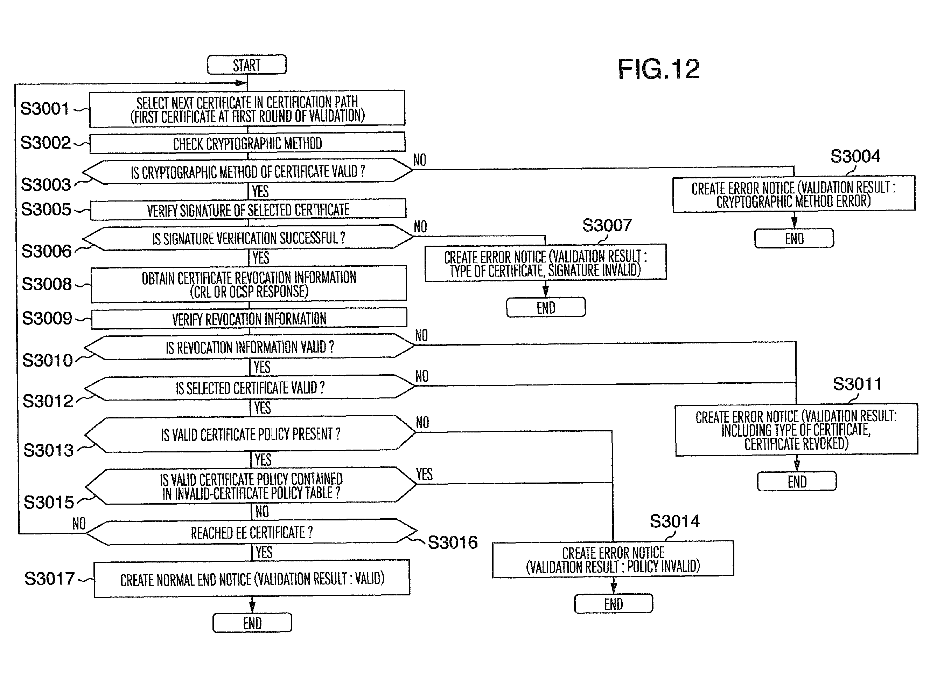

When the certification path building is successfully completed ("Yes" in Step S1006), the certificate validation unit 44 performs the validation of the certification path which was built in Step S1005 (Step S1007). Also in Step S1007, it is possible to check the cryptographic methods of all the certificates in the certification path. Note that the detail of the certification path validation processing will be described in FIG. 12.

When the certification path validation is unsuccessfully completed ("No" in Step S1008), the certificate validation unit 44 determines, from an error notice created in the certification path validation, whether or not this failure is a certification path validation failure due to an error in the EE certificate, such as EE certificate revocation, or an unauthorized signature of the EE certificate (Step S1009). When the error in the EE certificate is not the cause ("No" in Step S1009), in order to build a new certification path with regard to the issuer of the EE certificate from the same trust anchor, the certificate validation unit 44 returns to Step S1005. When the error in the EE certificate is the cause ("Yes" in Step S1009), the certificate validation unit 44 proceeds to Step S1004.

When the certification path validation is successfully completed ("Yes" in Step S1008), the certificate validation unit 44 creates a certificate validation response with the validity authentification result indicating that the certificate is valid (Step S1010).

Next, with the use of FIG 11, the detail of the check process of the cryptographic method of a certificate contained in the certificate validation request (Step S1002 in FIG. 10), in the certificate validation unit 44 is described.

The certificate validation unit 44 reads the EE certificate received in Step S1001 (Step S2001), and checks the cryptographic method used in generating the digital signature of the EE certificate (Step S2002). When it is determined that the cryptographic method of the EE certificate is invalid ("No" in Step S2003), the certificate validation unit 44 creates an error report indicating that the cause of the error of the validation processing is inclusion of an invalid cryptographic method (Step S2004).

When it is determined that the cryptographic method of the EE certificate is valid ("Yes" in Step S2003), the certificate validation unit 44 reads the trust anchor certificate received in Step S1001 (Step S2005). Next, the certificate validation unit 44 checks the cryptographic method used in generating the digital signature of the trust anchor certificate (Step S2006). When it is determined that the cryptographic method of the trust anchor certificate is not valid ("No" in Step S2007), the certificate validation unit 44 proceeds to S2004.

When the cryptographic method of the trust anchor certificate is valid ("Yes" in Step S2007), the certificate validation unit 44 determines whether or not an intermediate certificate is contained in the certificate validation request (Step S2008). When the intermediate certificate is not contained ("No" in Step S2008), the certificate validation unit 44 regards the cryptographic method check processing of the certificate validation request as successful and completes this processing, and proceeds to Step S1005 of FIG. 10.

When the intermediate certificate is contained ("Yes" in Step S2008), the certificate validation unit 44 reads the intermediate certificate received in Step S1001 (Step S2009). Next, the certificate validation unit 44 checks the cryptographic method used in generating the digital signature of the intermediate certificate (Step S2010). When it is determined that the cryptographic method of the intermediate certificate is not valid ("No" in Step S2011), the certificate validation unit 44 proceeds to Step S2004.

When it is determined that the cryptographic method of the intermediate certificate is valid ("Yes" in Step S2011), the certificate validation unit 44 regards the cryptographic method check processing of the certificate validation request as successful and completes this processing, and proceeds to Step S1003 of FIG. 10.

Note that the detail of the cryptographic method check processing in Step S2002,

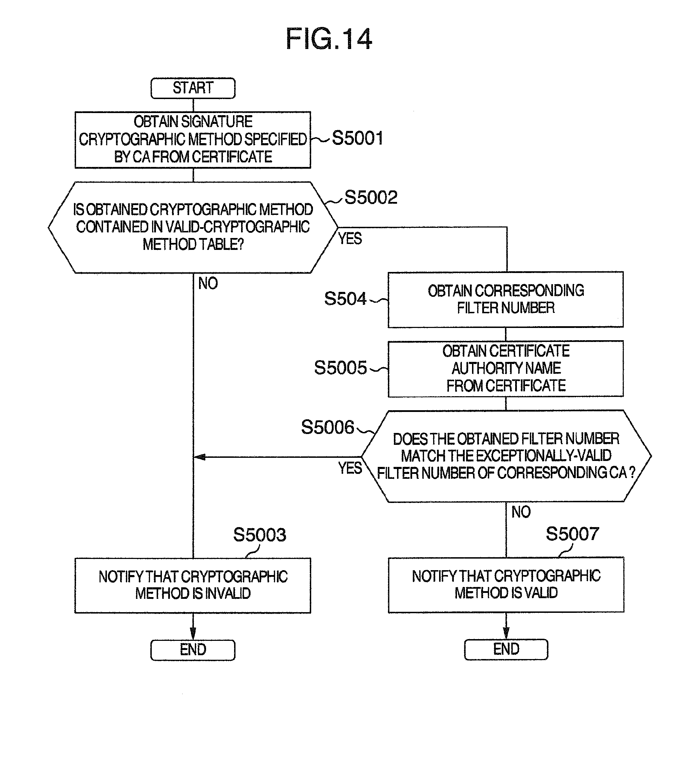

Step S2006, and Step S2010 will be described in FIG. 14.

Next, with the use of FIG 12, the detail of the certification path validation processing (Step S 1007) of FIG. 10 in the certificate validation unit 44 is described.

Among all the certificates (in the order from the certificate issued by the trust anchor to the EE certificate) in the certification path which is built in Step S1005 in FIG. 10, the following certificates are selected (Step S3001). However, at the first round of validation, the first certificate is selected.

The certificate validation unit 44 checks the cryptographic method which has been used in generating the digital signature of the certificate selected in Step S3001 (Step S3002). When it is determined that the cryptographic method of the selected certificate is not valid ("No" in Step S3003), the certificate validation unit 44 creates an error report indicating that the cause of the error of the validation processing is inclusion of an invalid cryptographic method (Step S3004).

Note that the detail of the cryptographic method check processing of Step S3002 will be described in FIG. 14.

When it is determined that the cryptographic method of the selected certificate is valid ("Yes" in Step S3003), the certificate validation unit 44 performs signature verification of the selected certificate using a certificate immediately before the selected certificate in the certification path (Step S3005). However, at the first round of validation, the signature verification is performed using the certificate of the trust anchor obtained in Step S1001 (FIG. 10).

When the signature verification is unsuccessfully completed ("No" in Step S3006), the certificate validation unit 44 creates an error notice specifying the type of such error-occurred certificate and indicating that the cause of the error of the validation processing is an invalid signature (Step S3007). When the signature verification is successfully completed ("Yes" in Step S3006), the certificate validation unit 44 proceeds to Step S3008.

It is confirmed whether or not the certificate revocation list (CRL or OCSP response) of the certificate selected in Step S3001 is present in the certificate revocation list holding unit 46, and when it is present in the certificate revocation list holding unit 46, the certificate validation unit 44 obtains the corresponding certificate revocation information. Moreover, when it is not present in the certificate revocation list holding unit 46, the certificate validation unit 44 accesses the CA providing the certificate revocation list, and obtains the latest certificate revocation list (Step S3008).

Next, the certificate validation unit 44 verifies the digital signature of the certificate revocation list obtained in Step S3008 with the use of the certificate which is already determined as valid in the certification path validation (Step S3009). When it is determined that the certificate revocation list is not valid ("No" in Step S3010), the certificate validation unit 44 creates an error notice specifying the type of such error-occurred certificate and indicating that the cause of the error of the validation processing is inclusion of a revoked certificate (Step S3011).

When the validation processing of the certificate revocation list is successfully completed ("Yes" in Step S3010), the certificate validation unit 44 verifies the content of the certificate revocation information and determines whether or not the certificate selected in Step S3001 is valid (Step S3012). When it is determined that the selected certificate is not valid ("No" in Step S3012), the certificate validation unit 44 proceeds to Step S3011, while when it is determined that the selected certificate is valid ("Yes" in Step S3012), the certificate validation unit 44 proceeds to Step S3013.

The certificate validation unit 44 performs such a policy control as to sequentially analyze the certificate policy, which is defined as valid between cross-certificated CAs, from the certificates in the certification path, thereby deriving a valid certificate policy in the certification path and also verifying whether this valid certificate policy matches the certificate policy which the verifier specified in the certificate validation request. When there is no valid certificate policy in the certificate selected in Step S3001 ("No" in Step S3013), the certificate validation unit 44 creates an error notice indicating that the cause of the error of the validation processing is inclusion of an invalid certificate policy (Step S3014).

After performing the policy control, if there is a valid certificate policy in the certificate selected in Step S3001 ("Yes" in Step S3013), the certificate validation unit 44 determines whether or not the selected certificate policy is contained in the table (FIG. 9) of the configuration information holding unit 48, in which the certificate policy which the verifier does not accept (which the verifier makes invalid) is set (Step S3015).

When the certificate policy which the verifier makes invalid is contained ("Yes" in Step S3015), the certificate validation unit 44 proceeds to Step S3014. When the certificate policy which the verifier makes invalid is not contained ("No" in Step S3015), the certificate validation unit 44 proceeds to Step S3016.

When the selected certificate is not the EE certificate ("No" in Step S3016), the certificate validation unit 44 returns to Step S3001. When the selected certificate is the EE certificate ("Yes" in Step S3016), the certificate validation unit 44 creates a normal end notice with the validity authentication processing result indicating that the certificate is valid (Step S3017).

Next, with the use of FIG. 14, the detail of the cryptographic method check processing (Step S2002, Step S2006, Step S2010) of FIG. 11 and cryptographic method check processing (Step S3002) of FIG. 12 in the certificate validation unit 44 is described. In FIG. 14, the table, in which the cryptographic method accepted by a verifier is set, of FIG. 8 is used.

The certificate validation unit 44 obtains the OID of the signature cryptographic algorithm from the item of signature cryptographic algorithm listed in the certificate which was read in Step S2001, Step S2005, or Step S2009, and also obtains the OID of the algorithm of a public key, the key length, and the OID of the parameter from subject public key information "subjctPublicKeyInfo" (Step S5001).

When the cryptographic method obtained in Step S5001 is not contained in the table, in which the cryptographic method accepted by a verifier is set, of FIG. 8 ("No" in Step S5002), the certificate validation unit 44 notifies that the cryptographic method is invalid, and completes the processing (Step S5003).

When the cryptographic method obtained in Step S5001 is contained in the table, in which the cryptographic method accepted by a verifier is set, of FIG. 8 ("Yes" in Step S5002), the certificate validation unit 44 obtains a filter number corresponding to the cryptographic method, which is obtained in Step S5001, from the column of filter number 71 of FIG. 8 (Step S5004). Next, the certificate validation unit 44 obtains the information on the CA (e.g., certificate authority name) from the item of issuer name (issuer) of the certificate read in Step S2001, Step S2005, or Step S2009 (Step S5005).

When a combination of the filter number obtained in Step 5004 and certificate authority name obtained in Step S5005 is present in the certificate authority name 78 and exceptionally-invalid filter number 79 of FIG. 8 ("Yes" in Step S5006), the certificate validation unit 44 proceeds to Step S5003.

When a combination of the filter number obtained in Step 5004 and certificate authority name obtained in Step S5005 is not present in the certificate authority name 78 and exceptionally-invalid filter number 79 of FIG. 8 ("No" in Step S5006), the certificate validation unit 44 notifies that the cryptographic method is valid, and completes the processing (Step S5007).

### Alternative Embodiments

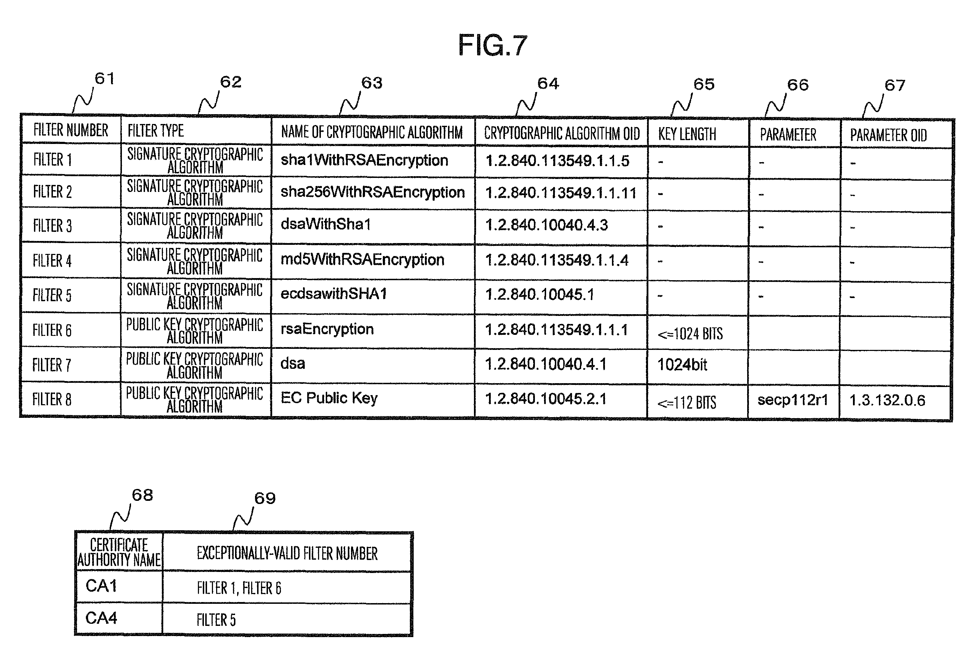

In the above-described embodiment, a case has been described as an example, where the cryptographic method check processing shown in FIG. 14 is performed using the information on the cryptographic method accepted by the verifier and the certificate authority which exceptionally makes this cryptographic method invalid, as shown in FIG. 8. However, the cryptographic method check processing shown in FIG. 14 may be performed using the information on the cryptographic method which the verifier does not accept and the certificate authority which exceptionally makes this cryptographic method valid, as shown in FIG. 7.

With the use of FIG. 7, a table, in which a cryptographic method which a verifier does not accept is set, and a table, in which a relation between a certificate authority exceptionally making valid a cryptographic method which the verifier does not accept and this cryptographic method is set, stored in the configuration information holding unit 48 are described.

A filter number is listed in a column of filter number 61 and either a "signature cryptographic algorithm" or a "public key cryptographic algorithm" is listed in a column of filter type 62, in the order of rows of the table. The name of a cryptographic algorithm which the verifier does not accept is listed in a column of cryptographic algorithm 63, and furthermore, the OID (Object IDentifier) of this cryptographic algorithm is listed in a column of cryptographic algorithm OID 64. When the filter type 62 is a public key cryptographic algorithm, the key length of the public key which the verifier does not accept is listed in a column of key length 65. In the corresponding cryptographic algorithm, if all the key lengths are not accepted, nothing is listed in the column of key length 65. The parameter of a public key which the verifier does not accept is listed in a column of parameter 66, and furthermore the OID of this parameter is listed in a column of parameter OID 67. If all the parameters are not accepted in the corresponding cryptographic algorithm, nothing is listed in the columns of parameter 66 and parameter OID7 67. When the filter type 62 is the signature cryptographic algorithm, nothing is listed in the column of key length 65, column of parameter 66, and column of parameter OID 67.

When a specific cryptographic algorithm is exceptionally made valid only for the certificate issued from a specific certificate authority, the name of the certificate authority is listed in a column of certificate authority name 68. In addition, in order to specify the cryptographic algorithm, a filter number listed in the column of filter number 61 is listed in a column of exceptionally-valid filter number 69. When a cryptographic method which a verifier exceptionally does not accept is not made valid, nothing is listed in the column of certificate authority 68 and column of exceptionally-invalid filter number 69.

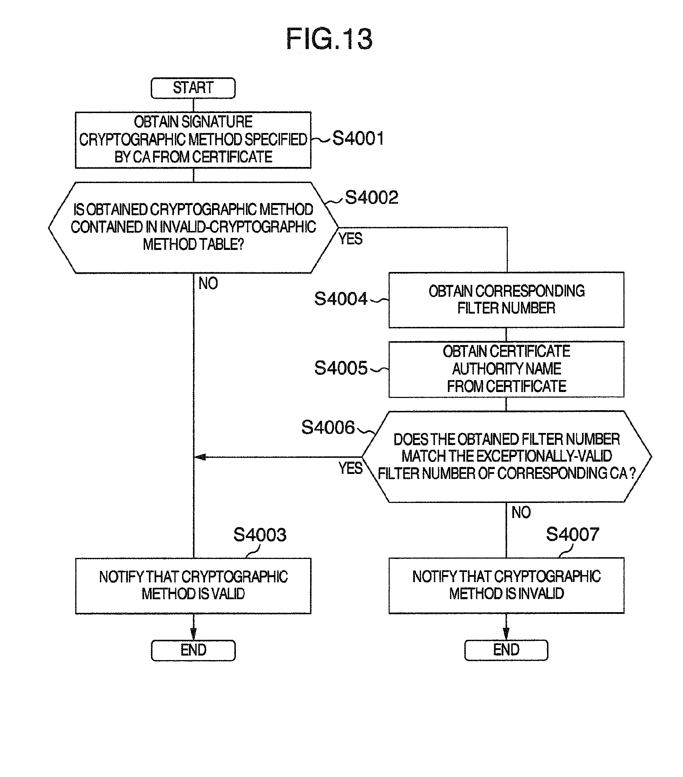

Next, with the use of FIG. 13, the detail of the cryptographic method check processing (Step S2002, Step S2006, Step S2010) of FIG. 11 and cryptographic method check processing (Step S3002) of FIG. 12 in the certificate validation unit 44 is described. In FIG. 13, the table, in which the cryptographic method which a verifier does not accept is set, of FIG. 7 is used.

The certificate validation unit 44 obtains the OID of the signature cryptographic algorithm from the item of signature cryptographic algorithm listed in the certificate which was read in Step S2001, Step S2005, or Step S2009, and also obtains the OID of the algorithm of a public key, the key length, and the OID of the parameter from the subject public key information "subjctPublicKeyInfo" (Step S4001).

When the cryptographic method obtained in Step 4001 is not contained in the table, in which the cryptographic method which a verifier does not accept is set, of FIG. 7 ("No" in Step S4002), the certificate validation unit 44 notifies that the cryptographic method is valid, and completes the processing (Step S4003).

When the cryptographic method obtained in Step 4001 is contained in the table, in which the cryptographic method which a verifier does not accept is set, of FIG. 7 ("Yes" in Step S4002), the certificate validation unit 44 obtains, from the filter number 61 of FIG. 7, a filter number corresponding to the cryptographic method obtained in Step S4001 (Step S4004). Next, the certificate validation unit 44 obtains the certificate authority name from the item of issuer name (issuer) of the certificate read in Step S2001, Step S2005, or Step S2009 (Step S4005).

When a combination of the filter number 61 obtained in Step 4004 and certificate authority name obtained in Step S4005 is present in the certificate authority name 68 and exceptionally-valid filter number 69 of FIG. 7 ("Yes" in Step S4006), the certificate validation unit 44 proceeds to Step S4003.

When a combination of the filter number obtained in Step 4004 and certificate authority name obtained in Step S4005 is not present in the certificate authority name 68 and exceptionally-valid filter number 69 of FIG. 7 ("No" in Step S4006), the certificate validation unit 44 notifies that the cryptographic method is invalid, and completes the processing (Step 45007).

In the above-described embodiments, an example has been described, wherein when receiving a request for validity authentication of a certificate of before certification path validation and during the certification path validation, the cryptographic method used in generating the digital signature of the certificate is checked. However, the cryptographic method may be checked either when receiving a request for validity authentication of a certificate of before certification path validation or during the certification path validation.

Moreover, in the above-described embodiments, the certificate validation processing has been described, with the cryptographic method defined as the cryptographic algorithm used for digital signature, the key length of a public key, and the parameter of the public key. However, the cryptographic method may be defined as any one or two of them.

In the foregoing, the embodiments of the present invention have been described in detail, and according to the above-described embodiments, the certificate validation processing can be performed safely and promptly. Moreover, the certification path building and certification path validation in the certificate validation processing can be performed safely and promptly.

In addition, the present invention is not limited to the above-described embodiments, and various modifications are possible without departing from the scope and spirit of the present invention.

## Claims

1. A certificate validation method by means of a validation server (13) connected to a network (14) together with a plurality of terminal devices (11₁ to 11_{M}) and a plurality of certificate authorities (12₁ to 12_{N}), the validation server (13) being adapted to receive a certificate validation request from a given terminal device (11) via the network (14), build a certification path of from a first certificate authority (12) to a second certificate authority (12), perform validation of the certification path, and send this validation result to the terminal device (11), which is the certificate validation request source, via the network (14), being **characterized by** that wherein the method comprising the following steps performed by the validation server (13):
storing information related to a cryptographic method used in generating a digital signature of the certificate in a storage unit (40b) of the validation server (13);
obtaining information related to the first cryptographic method from a certificate contained in the certificate validation request; and
when the information related to the first cryptographic method is not stored in the storage unit (40b) as valid information, determining that the information related to the first cryptographic method is invalid.

2. The certificate validation method according to claim 1, wherein when the information related to the first cryptographic method is stored in the storage unit (40b) as valid information and also information related to a second cryptographic method listed in the certificate in the certification path is not stored in the storage unit (40b) as valid information during the certification path validation, the validation server (13) determines that the information related to the second cryptographic method is invalid.

3. The certificate validation method according to claim 2, wherein when the information related to the first and second cryptographic method is stored in the storage unit (40b) as valid information and also the certificate is not issued yet from the certificate authority (12) which makes the first and second cryptographic methods valid, the validation server (13) determines that the first and second cryptographic methods are invalid.

4. The certificate validation method according to claim 2, wherein when the information related to the first and second cryptographic methods is stored in the storage unit (40b) as invalid information and also the certificate is not issued yet from the certificate authority (12) which makes the first and second cryptographic methods valid, the validation server (13) determines that the first and second cryptographic methods are invalid.

5. The certificate validation method according to claim 1, wherein the information related to a certificate policy of the certificate is stored in the storage unit (40b), and wherein during the certification path validation, the validation server (13) determines, based on information on the certificate policy of the certificate of the storage unit (40b), whether or not a certificate policy of the certificate in the certification path is valid.

6. The certificate validation method according to claim 1, wherein the certificate refers to an EE (End Entity) certificate, a trust anchor certificate, and an intermediate certificate, and wherein the information related to the cryptographic method is either of a cryptographic algorithm (63, 73) used in generating a digital signature of the certificate, a parameter (66, 76), and a key length (65, 75) of a public key.

7. A validation server (13) connected to a network (14) together with a plurality of terminal devices (11₁ to 11_{M}) and a plurality of certificate authorities (12₁ to 12_{N}), the validation server (13) being adapted to receive a certificate validation request from a given terminal device (11) via the network (14), build a certification path of from a first certificate authority (12) to a second certificate authority (12), perform validation of the certification path, and send this validation result to the terminal device (11), which is the certificate validation request source, via the network (14), wherein
the validation server (13) comprises:
a storage unit (40b) for storing information related to a cryptographic method used in generating a digital signature of the certificate; and
a processing unit (40a) which obtains information related to the first cryptographic method from a certificate contained in the certificate validation request, and which, when the information related to the first cryptographic method is not stored in the storage unit (40b) as valid information, determines that the information related to the first cryptographic method is invalid.

8. The validation server (13) according to claim 7, wherein when the information related to the first cryptographic method is stored in the storage unit (40b) as valid information and also information related to a second cryptographic method listed in the certificate in the certification path is not stored in the storage unit (40b) as valid information during the certification path validation, the processing unit (40a) determines that the information related to the second cryptographic method is invalid.

9. The validation server (13) according to claim 8, wherein when the information related to the first and second cryptographic methods is stored in the storage unit (40b) as valid information and also the certificate is not issued yet from the certificate authority (12) which makes the first and second cryptographic methods valid, the processing unit (40a) determines that the first and second cryptographic methods are invalid.

10. The validation server (13) according to claim 8, wherein when the information related to the first and second cryptographic methods is stored in the storage unit (40b) as invalid information and also the certificate is not issued yet from the certificate authority (12) which makes the first and second cryptographic methods valid, the processing unit (40a) determines that the first and second cryptographic methods are invalid.

11. The validation server (13) according to claim 7, wherein the information related to a certificate policy of the certificate is stored in the storage unit (40b), and wherein during the certification path validation, the processing unit (40a) determines, based on information on the certificate policy of the certificate of the storage unit (40b), whether or not a certificate policy of the certificate in the certification path is valid.

12. The validation server (13) according to claim 7, wherein the certificate refers to an EE (End Entity) certificate, a trust anchor certificate, and an intermediate certificate, and wherein information related to the cryptographic method is either of a cryptographic algorithm (63, 73) for digital signature of the certificate, a parameter (66, 76), and a key length (65, 75) of a public key used.
